# EUROPEAN PATENT APPLICATION

(11) **EP 4 607 666 A1**
(43) Date of publication of application: **27.08.2025**
(21) Application number: 24159160.1
(22) Date of filing: 22.02.2024
(51) Int. Cl.: H01M 50/209, H01M 10/613, H01M 10/617, H01M 10/647, H01M 10/625, H01M 10/653, H01M 10/6555, H01M 10/658

(54) **BATTERY PACK, BATTERY SYSTEM AND SPACER FOR BATTERY SYSTEM**

(71) Applicant: Samsung SDI Co., Ltd., Yongin-si, Gyeonggi-do 17084 (KR)
(72) Inventor: Ipek, Eymen, 8020 Graz (AT)
(74) Representative: Gulde & Partner

(57) **Abstract**

The present disclosure refers to a battery pack (10) including a battery cell stack (14) with a plurality of battery cells (12, 16) and at least one spacer (20) positioned between two adjected battery cells (12, 16) of the battery cell stack (14), further including a cooler (44) positioned at a bottom side (40) of the battery cell stack (14) and a venting side (42) opposite to the bottom side (40) of the battery cell stack (14), wherein the spacer (20) includes a thermally insulating core (22) and at least one heat conductive structure (24, 26) arranged on or near a lateral surfaces (32, 34) of the spacer (20) facing a lateral surface (52, 54) of the battery cell (12, 16), , wherein the heat conductive structure (24, 26) includes a center element (28) being arranged centrally in the lateral surface (32, 34) of the spacer (20) and trajectories (30) which extend from the center element (28) into peripheral areas of the lateral surface (32, 34) of the spacer (20).

## Description

### Field of the Disclosure

The present disclosure relates to a battery pack, a battery system, a spacer for a battery system, and a method for transferring heat within a battery pack according to the generic term of the independent patent claims.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

A single battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module may be formed by interconnecting the electrode terminals of the plurality of battery cells in an arrangement or configuration depending on a desired amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems often generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery peak include the individual battery modules, and the interconnects, which provide electrical conductivity between the battery modules.

Exothermic decomposition of cell components may lead to a so-called thermal runaway. Generally, thermal runaway refers to a process that is accelerated by increased temperature, in turn releasing energy that further increases temperature. Thermal runaway occurs in situations where an increase in temperature changes cell the conditions in a way that causes a further increase in temperature, often leading to a destructive result. In rechargeable battery systems, thermal runaway is associated with strongly exothermic reactions that are accelerated by temperature rise. In thermal runaway, the battery cell temperature rises incredibly fast and the energy stored is released very suddenly. In extreme cases, thermal runaway can cause battery cells to explode and start a fire. In minor cases, it can cause battery cells to be damaged beyond repair.

When a battery cell is heated above a critical temperature (typically above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery or poor battery maintenance. For example, overcharging or rapid charging may lead to thermal runaway.

During thermal runaway, the failed battery cell may reach a temperature exceeding about 700°C. Further, large quantities of hot gas are ejected from inside of the failed battery cell through a venting opening of a cell housing into the battery pack. The main components of the vented gas are H₂, CO₂, CO, electrolyte vapor and other hydrocarbons. The vented gas is therefore, flammable and potentially toxic. The vented gas also causes a gas-pressure increase inside the battery pack. In the worst case, the high temperatures lead to the process spreading to neighboring battery cells and fire in the battery pack. At this stage, the fire is hardly to extinguish.

In this respect, a battery module is with a plurality of battery cells, wherein thermal and electrically isolating spacers are alternately stacked with the battery cells in a battery stack, is known from US 2022 / 0131 208 A. The spacer includes a multilayer composite material with anisotropic thermal conductivity for high safety pack design. The multilayer composite material has a sandwich structure, and includes an inner layer consisting of an aerogel material which has ultra-low thermal conductivity, and two thermal conduction layers which contain graphene based nanocarbon and possess high thermal conductivity. The inner layer is sandwiched by the two thermal conduction layers.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, the invention is directed to a battery pack including a battery cell stack with a plurality of battery cells and at least one spacer positioned between two adjacent battery cells of the battery cell stack. The battery pack includes a cooler positioned at a bottom side of the battery cell stack and a venting side opposite to the bottom side of the battery cell stack. The spacer includes a thermally insulating core and at least one heat conductive structure arranged on or near a lateral surface of the spacer facing a lateral surface of the battery cell. The heat conductive structure includes a center element being arranged centrally in the lateral surface of the spacer and trajectories which extend from the center element into peripheral areas of the lateral surface of the spacer. According to another aspect of the present disclosure, the invention is directed to a battery system with at least one battery pack as described above.

Yet another aspect of the present disclosure refers to a spacer for a battery pack, wherein the spacer includes a thermally insulating core and at least one heat conductive structure arranged on or near a lateral surface of the spacer, wherein the heat conductive structure includes a center element being arranged in an upper half of the lateral surface of the spacer and trajectories which extend from the center element into peripheral areas of the spacer.

According to another aspect of the present disclosure, a method for transferring heat within a battery system is provided. The method includes the steps of:
a) providing a battery system as described in the above mentioned paragraphs;
b) separating the battery cells of the battery cell stack from each other by positioning a spacer between two adjacent battery cells;
c) wherein a first lateral surface of the spacer contacts a first lateral surface of a first battery cell and a second lateral surface of the spacer, directed opposite of the first lateral surface of the spacer contacts a second lateral surface of a second battery cell of the battery cell stack, and
d) transferring heat from a heated up battery cell of the battery cell stack via the spacer, wherein the heat is transferred from a hotspot of the battery cell to peripheral areas of the spacer such that a critical temperature which leads to thermal runaway of a battery cell adjacent to the spacer is not exceeded.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic sectional view of a battery system according to an embodiment of the invention.
- Fig. 2: illustrates a perspective view of a spacer according to an embodiment of the invention.
- Fig. 3: illustrates a perspective view of a spacer according to another embodiment of the invention.
- Fig. 4: illustrates a top view of a spacer according to yet another embodiment of the invention.
- Fig. 5: illustrates a flowchart of a process for transferring heat of a heated up battery cell within a battery pack according to the invention.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, the invention is directed to a battery pack including a battery cell stack with a plurality of battery cells and at least one spacer positioned between two adjacent battery cells of the battery cell stack. The battery pack includes a cooler positioned at a bottom side of the battery cell stack and a venting side opposite to the bottom side of the battery cell stack. The spacer includes a thermally insulating core and at least one heat conductive structure arranged on or near a lateral surface of the spacer facing a lateral surface of the battery cell. The heat conductive structure includes a center element being arranged in the lateral surface of the spacer and trajectories which extend from the center element into peripheral areas of the lateral surface of the spacer.

In other words, the invention is directed to a battery pack with a plurality of battery cells and at least one spacer, for examples, a plurality of spacers alternately arranged with the battery cells within the battery pack. The battery pack includes a cooler connected to a cooling side of the battery pack and venting means on a venting side opposite to the cooling side of the battery pack. The spacer is arranged between the adjacent battery cells to thermally insulate the battery cells and prevent a thermal runaway of the battery pack. Each spacer of the plurality of spacers, includes a thermally insulating core and at least one heat conductive structure, wherein the heat conductive structure is arranged on a lateral surface of the spacer facing towards a lateral surface of the battery cell to transfer. The heat conductive structure is adapted to transfer heat to the peripheral areas of the spacer and may thus also be named a heat transferring structure. The heat conductive structure includes a center element, or central spot/area, and trajectories, or arms/rays, extending from the center element into peripheral areas of the spacer to transfer the heat generated in an affected battery cell to the peripheral areas of the spacer and therefore reduce the heating of adjacent battery cells to prevent the battery pack from a thermal runaway.

A spacer is an element that separates two adjacent battery cells and thermally disconnects the two adjacent battery cells from each other, so that a heat transfer between the two adjacent battery cells is minimized. A heat conductive structure is a structure made of a material with a high thermal conductivity such as silver, copper, aluminum, iron and other metal structures.

A thermally insulating core is a core made of a material with a very low thermal conductivity such as a polymer material, a foam or other insulating materials.

A cooler is any structure that is designed to lead a cooling fluid, e.g. water, to a housing of a battery cell to cool down the battery cell and transfer heat from the battery cell towards other areas of a battery system. A venting side is a side of the battery cell to relief pressure from the battery cell in case there is a pressure increase inside the battery cell beyond a certain threshold value and a further pressure increase would lead to an unallowed deformation of the battery cell.

The heat conductive structure being on a lateral surface of the spacers means that the heat conductive structure is in direct contact with a lateral surface of the battery cell when the spacer is inserted into the battery cell stack, i.e. in an assembled stated of the battery cell stack or battery pack. The heat conductive structure being near the surface means that the heat conductive structure may be fully or partly embedded in the thermal insulating material of the core of the spacer, wherein the heat conductive structure is a maximum of 10%, preferably a maximum of 5% in extent of the spacer away from the lateral surfaces of the spacer.

The heat conductive structure of the spacer conducts heat of a heated battery cell, e.g. in case of a malfunction of a battery cell, so that the thermal impact to the immediately adjacent battery cells of the heated battery cell is minimized. This prevents the whole battery cell stack from a thermal runaway and a chain reaction that could lead to a burn down of the battery system. If the heat is transferred to regions of the spacer not directly adjected to a heat hotspot at a lateral surface of the affected battery cell, such a thermal runaway can be prevented so that only the heated battery cell with the malfunction is affected. This does not only improve the safety of the battery cell, but also makes it possible and cost effective to repair a battery system by simple changing the one affected battery cell. The trajectories allow to reduce weight in comparison to a standard metal plate so that the weight of the spacer may be reduced. Furthermore, the trajectories allow a thermal conduction to areas of the spacer and the battery pack, where the heat can be dissipated best and most easily, so that the risk of a thermal runaway can be reduced. Another aspect of the heat conductive structure with the center element and the trajectories is that the heat capacity of the heat conductive element can be reduced in comparison to a metal plate, such that the structure heats up und cools down more quickly.

According to an embodiment of the invention the spacer includes two heat conductive structures arranged on or near opposite lateral surfaces of the spacer. That is, one of the two heat conductive structures may be arranged on a first lateral surface of the spacer, the first lateral surface facing a first battery cell of the two adjacent battery cells, and the other one of the two heat conductive structures may be arranged on a second lateral surface of the spacer, the second lateral surface facing a second battery cell of the two adjacent battery cells. Two heat conductive structures allow a more evenly heating/warm up of the spacer and a better heat transfer to the peripheral regions of the spacer, irrespective which one of the two adjacent battery cells connected to the spacer is heated up, so that a thermal runaway is disrupted in both ways.

In an embodiment of the battery pack the heat conductive structure is distanced from the venting side by at least 10% of the distance from the cooling side to the venting side. This allows a better transport of heat from a hotpot of a malfunction battery cell so that the heat transferred via the spacer to an adjected battery cell is minimized. While spacers without heat conductive structures can only slow down the heat transfer, the heat conductive structure can transfer the heat from the hot spot to cooler regions of the spacer, so that the spacer heats up more evenly and less heat is transferred to the adjacent battery cell.

According to an embodiment of the invention the heat conductive structure has a thermal conductivity that is at least one hundred times, more preferably at least five hundred times, especially preferred at least one thousand times higher than the thermal conductivity of the thermally insulating core. The higher thermal conductivity of the heat conductive structure leads to a more evenly warm up of the spacer and a better heat transfer to the peripheral regions of the spacer, so that more heat can be transferred to the cooler and the heat up of the adjected battery cell is further slowed down.

In an embodiment of the battery pack, the heat conductive structure is made of metal or includes metal, for example, a metal composite, for the heat distribution within the spacer. While the core of the spacer may be made of a material with low thermal conductivity such as a polymer, the heat conductive structure made of metal has a significantly higher thermal conductivity compared to plastic components, so that heat can be better conducted to the edge areas of the spacer and more uniform heating of the spacer is achieved. This prevents or at least reduces the risk of hot spots in the spacer and spillover to an adjacent battery cell.

The metal may e.g. be aluminum or copper. Aluminum and copper do not only have a high thermal conductivity, but can also be easily processed and formed to form thermally conductive components.

According to an embodiment of the invention, the heat conductive structure is designed as a stamped or fine blanked metal plate of a high thermal conductive material or include such stamped plate. Stamped metal plates on the surface of the spacer or embedded in the edge area of the spacer can simply transfer heat from a hotspot of an affected battery cell in touch with the spacer and therefore lead to an evenly heat up of the spacer.

According to another embodiment of the invention, the heat conductive structure includes a thermally highly conductive center element and thermally highly conductive trajectories which extend from the center into the peripheral areas of the spacer, wherein a first set of trajectories extend from the center element into the upper peripheral areas of the spacer and a second set of trajectories extend from the center element into the lower peripheral areas of the spacer. Such parts can reduce weight and decrease the thermal capacity of the heat conductive structure, such that the spacer is heated up more equally and the heat is transferred from a heat hotspot at a lateral surface of the battery cell so that the adjacent battery is less affected by such a heat hotspot. Furthermore, such parts can easily be produces as stamping parts. The trajectories can define thermal distribution leads and transfer heat along the trajectories.

In an embodiment of the invention, the heat conductive structure is designed in a star structure including a center and a plurality of trajectories extending from the center into the peripheral areas of the spacer, wherein the trajectories have the same distance between each other. The trajectories of a star are very good at transporting heat from the center to the peripheries of the spacer. Therefore, an evenly heat up of the spacer can be achieved, preventing adjected battery cells from heating up beyond a critical temperature for a thermal runaway of the battery cell stack.

In another embodiment of the invention, the heat conductive layers are designed in a spider web structure, wherein the trajectories extend from the center element into the peripheral areas of the spacer and further circular structures connect the trajectories in such a way that additional heat can be transferred along the circular structures. In other words, the spider web structure includes a center and a plurality of arms/rays extending from the center into the peripheral regions of the spacer and further including a plurality of circles surrounding the center and connecting the arms/rays extending form the center to the peripheral areas of the spacer. The spider web structure allows the heat to be dissipated from the center and distributed evenly throughout the spacer. This prevents local overheating of the spacer due to a punctual heat input from a defective battery cell, especially from a heat hotspot at a lateral surface of an affected battery cell.

According to an embodiment of the invention, the heat conductive structure is embedded in the thermally insulating material of the thermally insulation core. Embedding the heat conductive layer can prevent damage to the heat conductive layers when mounting the battery cell stack and especially prevent the trajectories from being broken or bent while mounting the spacers at the battery pack Furthermore, the spacers can be manufactured by a simple injection molding process in which the heat distribution elements are encased by the core of the spacer and thus fixed in the intended positions.

In an embodiment of the battery pack, the battery cells are designed as prismatic battery cells. Prismatic battery cells can be easily assembled in parallel stacks, so that the heat can be transferred from the prismatic battery cells via the spacers. The spacer could also be used for round cells with an adapted design, so that neighbor battery cells are separated by the spacer to avoid a thermal runaway of a battery pack.

According to another embodiment of the invention, it is provided a battery system including a battery pack with a housing and a plurality of battery cells and spacers arranged alternately to a battery cell stack within the housing, forming a battery cell stack. The battery system further includes a cooler connected to a cooling side at the bottom of the battery cell stack and a venting side opposite to the cooling side of the battery cell stack. The spacer includes a thermally insulating core and at least one heat conductive structure arranged on or near lateral surfaces of the spacer facing a lateral surface of the battery cell. The heat conductive structure includes a center element being arranged in an upper half of the lateral surface of the spacer and trajectories which extend from the center element into peripheral areas of the lateral surface of the spacer. The trajectories preferably extend further to the cooling side than to the venting side of the battery pack.

The spacer conducts the of a heated battery cell, e.g. in case of a malfunction of a battery cell, so that the thermal impact to the immediately adjacent battery cells of the heated battery cell is minimized. This prevents the whole battery pack from a thermal runaway and a chain reaction that could lead to a burn down of the battery system. If the heat is transferred to regions of the spacer not directly adjected to the heated battery cell, such a thermal runaway can be prevented so that only the heated battery cell with the malfunction is affected. This does not only improve the safety of the battery cell, but also makes it possible and cost effective to repair a battery system by simple changing the one affected battery cell.

According to another embodiment of the invention, it is provided a spacer for a battery pack as described in the previous sections, wherein the spacer includes a thermally insulating core and at least one heat conductive structure arranged on or near a lateral surface of the spacer, wherein the heat conductive structure includes a center element being arranged centrally in an upper half of the lateral surface of the spacer and trajectories which extend from the center element into peripheral areas of the spacer. The spacer according to the invention allows a more evenly heat distribution within the spacer and therefore heat dissipation from a heat hotspot of an affected battery cell. This decreases the risk of a thermal runaway, as the adjected battery cells are heated more evenly and punctual heat pockets are avoided, which could otherwise lead to thermal damage of the neighboring battery cells or a thermal runaway of the battery pack.

According to an embodiment of the spacer, the spacer includes two heat conductive structures, wherein the heat conductive structures are arranged on opposite lateral surfaces or embedded in the thermally insulating material of the core near opposite surfaces of the spacer. Heat conductive structures on the lateral surfaces of the spacer allow a best possible heat distribution when the spacer is in contact with a lateral surface of battery cell. Partly or fully embedded heat distribution structure reduce the danger of damaging one or more of the trajectories, when the spacer is inserted into the battery pack. The heat conductive trajectories can transport heat from the center element to the peripheries of the spacer. Therefore, an evenly heat up of the spacer can be achieved, preventing adjected battery cells from heating up beyond a critical temperature for a thermal runaway of the battery cell stack.

According to yet another aspect of the invention, it is provided a method for transferring heat within a battery pack. The method includes the steps of:
a) providing a battery system as described in the above mentioned paragraphs;
b) separating the battery cells of the battery cell stack from each other by positioning a spacer between two battery cells;
c) wherein a first lateral surface of the spacer contacts a first lateral surface of a first battery cell and a second lateral surface of the spacer, directed opposite of the first lateral surface of the spacer contacts a second lateral surface of a second battery cell of the battery cell stack, and
d) transferring heat from a heated up battery cell of the battery cell stacks via the spacer, wherein the heat is transferred from a hotspot of the battery cell to peripheral areas of the spacer such that a critical temperature which leads to thermal runaway of a battery cell adjacent to the spacer is not exceeded.

The first lateral surface of the battery cell is opposite to the second lateral surface of the battery cell, such that a spacer contacts and thermally separates the first lateral surface of a first battery cell and the second lateral surface of a second battery cell.

### Specific Embodiments

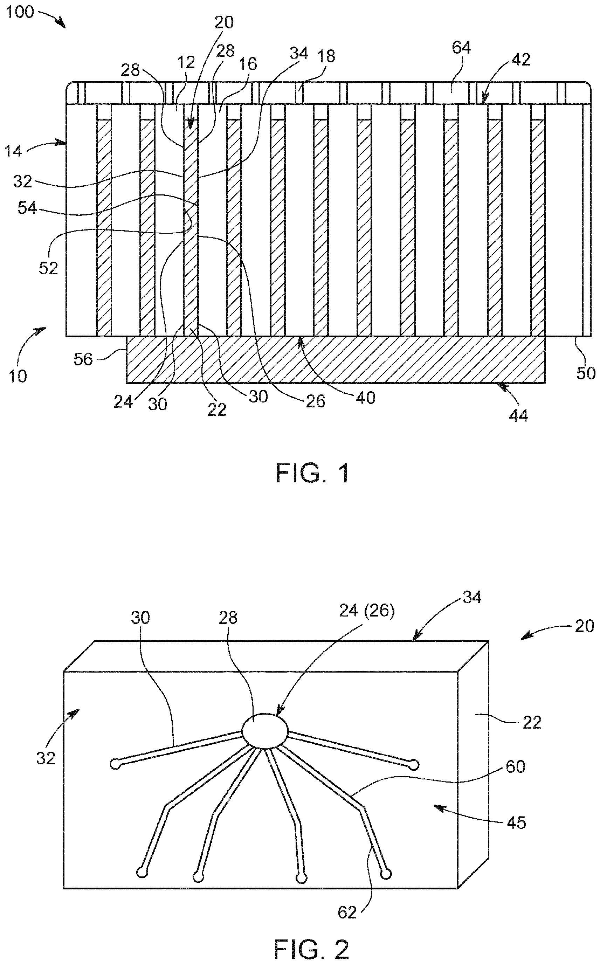

Fig. 1 is a schematic sectional view illustrating a battery system according to an embodiment of the invention. A battery system 100 includes a battery pack 10 with a housing 50 and a plurality of battery cells 12, 16, and at least one spacer 20 arranged between two adjacent battery cells 12, 16. In the embodiment of the battery pack 10, the battery cells 12, 16, and the spacers 20 are arranged alternately so as to form a battery cell stack 14 within the housing 50. The battery pack 10 further includes a cooler 44 connected to a cooling side 40 of the battery pack 10. In the embodiment, the cooling side 40 is a bottom side of the battery pack 10. Each of the battery cells 12, 16 further includes a venting valve 18 orientated away from the cooling side 40 and towards a venting side 42 opposite to the cooling side 40 of the battery pack 10. The venting valve 18 is usually positioned at a cover plate 64 sealing a case that encloses the battery cells 12, 16. The cooler 44 includes a cooling plate 56 configured to a coolant can dissipate heat from the battery cells 12, 16 of the battery cell stack 14. The battery cell stack 14 is arranged on the cooling plate 56. The spacer 20 includes a thermally insulating core 22 made of a material with low thermal conductivity, such as a polymer or a hard foam. Two heat conductive structures 24, 26 are arranged on or near the opposite lateral surfaces 32, 34 of each spacer 20, so that a first lateral surface 32 of the spacer 20 is facing a first lateral surface 52 of a first battery cell 12. A second lateral surface 34 of the spacer 20, opposite to the first lateral surface 32 of the spacer 20, is facing a second lateral surface 54 of a second battery cell 16, opposite to the first lateral surface 52 of the first battery cell 12.

Fig. 2 shows a perspective view of an embodiment of a spacer 20 for such a battery back 10. The spacer 20 has a thermally insulating core 22 and two heat conductive structures 24, 26 arranged on or near opposite lateral surfaces 32, 34 of the spacer 20. In the embodiment of Fig. 2, the heat conductive structures 24, 26 are disposed on the lateral surfaces 32, 34, respectively. The heat conductive structures 24, 26 include a thermally high conductive center element 28 to cover an expected heat hotspot of the battery cell 12 when the battery cell 12 is heating up due to a malfunction. There are a plurality of trajectories 30 which extend from the thermally high conductive center element 28 into the peripheral areas of the spacer 20 for a better heat transfer in order to achieve a more even heat distribution of the spacer 20 and thus, the heat conductive structure 24, 26 may be designed in a radial structure 45. The center element 28 and the trajectories 30 are made of a thermally high conductive material such as copper or aluminum. As shown in Fig. 2, the heat conductive structure 24, 26 includes a set of six trajectories 30 which extent from the thermally high conductive center element 28 into the lower peripheral area of the spacer 20 in order to transfer heat to the cooling side of the battery pack 10. Some trajectories 30 may have a first portion 60 extending from the thermally high conductive center element 28 and a second portion 62 extending at an angle to the first portion 60 to provide as uniform coverage of the lateral surface 32, 34 of the spacer 20 as possible. The heat conductive 24, 26 structure may further include another set of trajectories 30 which extend from the center element 28 into the upper peripheral area of the spacer 20 to further improve equal heat distribution on the lateral surface of the spacer 20. The heat conductive structure 24, 26 can be produced easily and inexpensively, for example, as a stamped part or as a fine blanked part. Alternatively, the heat conductive structure 24, 26 may be designed in a star structure, wherein the trajectories 30 extend from the center element 28 into the peripheral areas of the spacer 20 and have the same distance between each trajectory 30.

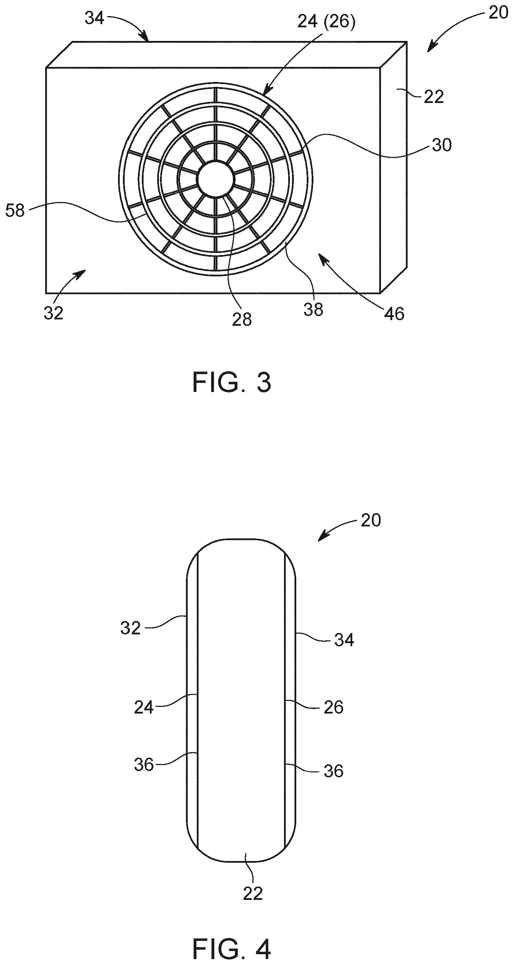

Fig. 3 shows another example of a spacer 20 according to the invention. The spacer 20 has a thermally insulating core 22 and two heat conductive structures 24, 26 arranged on or near opposite lateral surfaces 32, 34 of the spacer 20. The heat conductive structures 24, 26 are designed in a spider web structure 46, having a thermally high conductive center element 28 to cover an expected hotspot of the battery cell 12 which may arise when the battery cell 12 is heating up due to a malfunction. The spider web structure 46 includes a plurality of trajectories 30 extending from the center element 28 into the peripheral areas of the spacer 20 and circular structures 58 connecting the trajectories 30 in such a way that additional heat can be conducted along the circular structures 58. The center element 28, the circular structures 58 and the trajectories 30 are made of a thermally high conductive material such as copper or aluminum. The heat conductive structure 24, 26 can be produced easily and inexpensively, for example, as a stamped part or as a fine blanked part. The spider web structure 46 allows a better heat transfer on the lateral surface 32, 34 of the spacer 20 in order to achieve a more even heat distribution in the spacer 20.

Fig. 4 shows a cross section of a spacer 20 according to another embodiment. The spacer 20 includes a thermally insulating core 22 and two heat conductive structures 24, 26 of a thermally high conductive material such as copper or aluminum embedded within the thermally insulating core 22. The heat conductive structures 24, 26 are formed as stamped metal plates 36 partly or fully embedded in the thermally insolating core 22 of the spacer 20. The heat conductive structures 24, 26 may be designed as described in the previous section and designed in a radial structure, a star structure, a spider web structure or likewise. The distance from the first lateral surface 32 to the first heat conductive structure 24 is preferable between 1% and 10%, more preferable between 2% and 5% of the overall thickness of the spacer 20. The distance from the second lateral surface 34 to the second heat conductive structure 26 is preferable between 1% and 10%, more preferable between 2% and 5% of the overall thickness of the spacer 20. The gap between the first heat conductive structure 24 and the second heat conductive structure 26 is preferably more than 80% of the total thickness of the spacer 20.

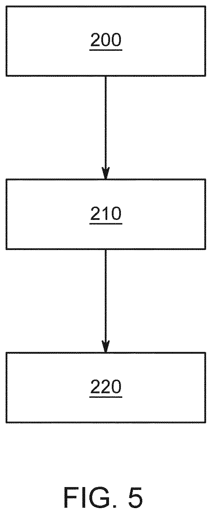

Fig. 5 shows a flowchart of a process according to the invention for transferring the heat from a battery cell 12 which is heated up by a malfunction. A heated battery cell 12 is a battery cell whose temperature is far above the normal operating temperature or in which a thermal runaway is already taking place. In a first step <200> a battery pack 10 as described in the previous sections is provided. In a second step <210> of the method, the battery cells 12, 16 of the battery cell stack 14 are separated from each other by positioning a spacer 20 between the first battery cell 12 and the second battery cell 16, such that a first lateral surface 32 of the spacer 20 contacts a first lateral surface 52 of the first battery cell 12 and a second lateral surface 34 of the spacer 20, opposite to the first lateral surface 32, contact a second surface 54 of a second battery cell 16 of the battery cell stack. In a third step <220> heat from a heated battery cell 12 of the battery cell stacks 14 is transferred via the spacer 20, wherein the heat is transferred from a heat hotspot on a lateral surface 52, 54 of the affected battery cell 12 to the center element 28 of the spacer 20 and further to the peripheral areas of the spacer 20 such that a critical temperature which may lead to a thermal runaway of a battery cell 16 adjacent to the heated battery cell 12 is not exceeded.

### Reference signs

- 10: battery pack
- 12: first battery cell
- 14: battery cell stack
- 16: second battery cell
- 18: venting valve
- 20: spacer
- 22: thermally insulating core
- 24: first heat conductive structure
- 26: second heat conductive structure
- 28: center element
- 30: trajectories
- 32: first lateral surface
- 34: second lateral surface
- 36: stamped metal plate
- 40: cooling side / bottom side
- 42: venting side
- 44: cooler
- 45: radial structure
- 46: spider web structure
- 50: housing
- 52: first lateral surface of the battery cell
- 54: second lateral surface of the battery cell
- 56: cooling plate
- 58: circular structure
- 60: first portion
- 62: second portion
- 64: cover plate
- 100: battery system

## Claims

1. A battery pack (10) comprising a battery cell stack (14) with a plurality of battery cells (12, 16) and at least one spacer (20) positioned between two adjacent battery cells (12, 16) of the battery cell stack (14), further comprising a cooler (44) positioned at a bottom side (40) of the battery cell stack (14) and a venting side (42) opposite to the bottom side (40) of the battery cell stack (14), wherein the spacer (20) comprises a thermally insulating core (22) and at least one heat conductive structure (24, 26) arranged on or near a lateral surface (32, 34) of the spacer (20) facing a lateral surface (52, 54) of the battery cell (12, 16), wherein the heat conductive structure (24, 26) comprises a center element (28) being arranged centrally in the lateral surface (32, 34) of the spacer (20) and trajectories (30) which extend from the center element (28) into peripheral areas of the lateral surface (32, 34) of the spacer (20).

2. The battery pack (10) according to claim 1, wherein the spacer (20) comprises two heat conductive structures (24, 26) arranged on or near opposite lateral surfaces (32, 34) of the spacer (20).

3. The battery pack (10) according to claim 1 or 2, wherein the heat conductive structure (24, 26) has a thermal conductivity that is at least one hundred times higher than the thermal conductivity of the thermally insulating core (22).

4. The battery pack (10) according to any one of the preceding claims, wherein the heat conductive structure (24, 26) is made of metal.

5. The battery pack (10) according to claim 4, wherein the metal is aluminum or copper.

6. The battery pack (10) according to any one of the preceding claims, wherein the heat conductive structure (24, 26) is designed as a stamped metal plate (36) of a high thermal conductive material or comprises such a stamped metal plate (36).

7. The battery pack (10) according to any one of the preceding claims, wherein the heat conductive structure (24, 26) comprises a thermally highly conductive center element (28) and a first set of thermally high conductive trajectories (30) which extend from the center element (28) into the upper peripheral areas of the spacer (20) and a second set of thermally highly conductive trajectories (30) which extend from the center element (28) into the lower peripheral areas of the spacer (20).

8. The battery pack (10) according to any one of the preceding claims, wherein the heat conductive structure (24, 26) is designed in a radial structure.

9. The battery pack (10) according to any one of the preceding claims, wherein the heat conductive structure (24, 26) is designed in a star structure, wherein the trajectories (30) extend from the center element (28) into the peripheral areas of the spacer (20) and have the same distances between each trajectory (30).

10. The battery pack (10) according to any one of the preceding claims, wherein the heat conductive structure (24, 26) is designed in a spider web structure (46), wherein the trajectories (30) extend from the center element (28) into the peripheral areas of the spacer (20) and further circular structures connecting the trajectories (30) in such a way that additional heat can be conducted along the circular structures.

11. The battery pack (10) according to any one of the preceding claims, wherein the heat conductive structure (24, 26) is embedded in the thermally insulating material of the thermally insulating core (22).

12. The battery pack (10) according to any one of the preceding claims, wherein the battery cells (12, 16) are prismatic battery cells (12, 16).

13. A battery system (100) comprising a battery pack (10) according to any one of claim 1 to 12.

14. A method for transferring heat within a battery pack (10), wherein the method comprises the steps of:
a) providing a battery pack (10) as defined in claim 1;
b) separating the battery cells (12, 16) of the battery cell stack (14) from each other by positioning a spacer (20) between the two battery cells (12, 16),
c) wherein a first lateral surface (32) of the spacer (20) contacts a first lateral surface (52) of a first battery cell (12) and a second lateral surface (34) of the spacer (20), directed opposite of the first lateral surface (32) of the spacer (20) contacts a second lateral surface (54) of a second battery cell (16) of the battery cell stack (14), and
d) transferring heat from a heated up battery cell (12) of the battery cell stacks (14) via the spacer (20), wherein the heat is transferred from a hotspot of the battery cell (12) to peripheral areas of the spacer (20) such that a critical temperature which leads to thermal runaway of a battery cell (12, 16) adjacent to the spacer (20) is not exceeded.

## Amended claims

### Amended claims in accordance with Rule 137(2) EPC.

1. A battery pack (10) comprising a battery cell stack (14) with a plurality of battery cells (12, 16) and at least one spacer (20) positioned between two adjacent battery cells (12, 16) of the battery cell stack (14), further comprising a cooler (44) positioned at a bottom side (40) of the battery cell stack (14) and a venting side (42) opposite to the bottom side (40) of the battery cell stack (14), wherein the spacer (20) comprises a thermally insulating core (22) and at least one heat conductive structure (24, 26) arranged on or near a lateral surface (32, 34) of the spacer (20) facing a lateral surface (52, 54) of the battery cell (12, 16), wherein the heat conductive structure (24, 26) comprises a center element (28) being arranged centrally in the lateral surface (32, 34) of the spacer (20) and trajectories (30) which extend from the center element (28) into peripheral areas of the lateral surface (32, 34) of the spacer (20), wherein the heat conductive structure (24, 26) is designed in a radial structure and comprises a thermally highly conductive center element (28) and a first set of thermally high conductive trajectories (30) which extend from the center element (28) into the upper peripheral areas of the spacer (20) and a second set of thermally highly conductive trajectories (30) which extend from the center element (28) into the lower peripheral areas of the spacer (20), wherein the heat conductive structure (24, 26) is embedded in the insulating material of the thermally insulating core (22).

2. The battery pack (10) according to claim 1, wherein the spacer (20) comprises two heat conductive structures (24, 26) arranged on or near opposite lateral surfaces (32, 34) of the spacer (20).

3. The battery pack (10) according to claim 1 or 2, wherein the heat conductive structure (24, 26) has a thermal conductivity that is at least one hundred times higher than the thermal conductivity of the thermally insulating core (22).

4. The battery pack (10) according to any one of the preceding claims, wherein the heat conductive structure (24, 26) is made of metal.

5. The battery pack (10) according to claim 4, wherein the metal is aluminum or copper.

6. The battery pack (10) according to any one of the preceding claims, wherein the heat conductive structure (24, 26) is designed as a stamped metal plate (36) of a high thermal conductive material or comprises such a stamped metal plate (36).

7. The battery pack (10) according to any one of the preceding claims, wherein the heat conductive structure (24, 26) is designed in a star structure, wherein the trajectories (30) extend from the center element (28) into the peripheral areas of the spacer (20) and have the same distances between each trajectory (30).

8. The battery pack (10) according to claim 1 to 6, wherein the heat conductive structure (24, 26) is designed in a spider web structure (46), wherein the trajectories (30) extend from the center element (28) into the peripheral areas of the spacer (20) and further circular structures connecting the trajectories (30) in such a way that additional heat can be conducted along the circular structures.

9. The battery pack (10) according to any one of the preceding claims, wherein the battery cells (12, 16) are prismatic battery cells (12, 16).

10. A battery system (100) comprising a battery pack (10) according to any one of claim 1 to 9.

11. A method for transferring heat within a battery pack (10), wherein the method comprises the steps of:
a) providing a battery pack (10) as defined in claim 1;
b) separating the battery cells (12, 16) of the battery cell stack (14) from each other by positioning a spacer (20) between the two battery cells (12, 16),
c) wherein a first lateral surface (32) of the spacer (20) contacts a first lateral surface (52) of a first battery cell (12) and a second lateral surface (34) of the spacer (20), directed opposite of the first lateral surface (32) of the spacer (20) contacts a second lateral surface (54) of a second battery cell (16) of the battery cell stack (14), and
d) transferring heat from a heated up battery cell (12) of the battery cell stacks (14) via the spacer (20), wherein the heat is transferred from a hotspot of the battery cell (12) to peripheral areas of the spacer (20) such that a critical temperature which leads to thermal runaway of a battery cell (12, 16) adjacent to the spacer (20) is not exceeded.
